# EUROPÄISCHE PATENTSCHRIFT

(11) **EP 4 269 855 B1**
(45) Veröffentlichungstag und Bekanntmachung des Hinweises auf die Patenterteilung: **15.04.2026**
(21) Anmeldenummer: 22170175.8
(22) Anmeldetag: 27.04.2022
(51) Int. Cl.: F16L 59/065, F16L 59/14, F16L 59/02, F16L 59/153, B32B 1/08, B32B 5/18, B32B 27/06

(54) **THERMISCH GEDÄMMTES LEITUNGSROHR**
THERMALLY INSULATED CONDUIT
CONDUITE THERMO-ISOLÉE

(43) Veröffentlichungstag der Anmeldung: 01.11.2023
(73) Patentinhaber: RK Infra GesmbH, 4300 St. Valentin (AT)
(72) Erfinder: Wedl, Gerald, 3161 St. Veit an der Gölsen (AT)
(74) Vertreter: Ege Lee & Roider Patentanwälte

(56) Entgegenhaltungen:
- WO-A1-02/31400
- WO-A1-2017/144609
- WO-A1-2020/204700

## Beschreibung

Die Erfindung betrifft ein thermisch gedämmtes Leitungsrohr.

Als Leitungsrohre kommen oft Kunststoffrohre zum Einsatz, die zum Transport unterschiedlicher Medien, wie Wasser, Öl oder Gas, dienen. Insbesondere finden Leitungsrohre auch beim Fernwärmeleitungsbau Verwendung, um Medien für Wasser- und Heizungsversorgungsanlagen zu transportieren.

Aus dem Dokument ist DE 20 2019 004 158 U1 ist beispielsweise ein isoliertes Rohr bekannt, das eine flexible Vakuumisolierplatte aufweist. Die Vakuumisolierplatte ist in Form von Einheiten ausgebildet, die ein Netz bilden, das um ein Innenrohr gewickelt ist. Aus dem Dokument WO 2020/204700 A1 ist ein isoliertes Rohr bekannt, das ein oder mehrere Innenrohre umfasst, die von einer ersten Schaumschicht umgeben sind, sowie ein flexibles Vakuumisolationspaneel, das um diese erste Schaumschicht gewickelt ist. Das isolierte Rohr umfasst vorzugsweise eine zweite Schaumschicht, die das flexible Vakuumisolationspaneel umgibt, sowie ein gewelltes Außengehäuse. Vorzugsweise sind die erste Schaumschicht, das Vakuumisolationspaneel, die optionale zweite Schaumschicht und das optionale Außengehäuse in unverbundener Weise angeordnet. Weiterer technologischer Hintergrund kann der WO 2017/144609 A1 und der WO 02/31400 A1 entnommen werden.

Bei den bekannten Leitungsrohren kann es beim Transport eines, insbesondere warmen oder heißen, Mediums über weite Strecken jedoch zu Wärmeverlusten kommen. Die Wärmeverluste können dazu führen, dass sich die Fließfähigkeit des transportierten Mediums verändert oder ein Temperaturniveau für eine nachfolgende Anwendung nicht mehr bereitgestellt werden kann. Ferner kann es bei den bekannten mit Vakuumisolierplatten isolierten Rohren, insbesondere beim Aufrollen oder Verlegen der Rohre, zu Beschädigungen der Vakuumisolierplatten kommen, wodurch keine optimale oder hinreichende Wärmedämmung mehr gewährleistet werden kann. Anforderungen an Sicherheit, Zuverlässigkeit und Robustheit können somit nicht optimal erfüllt werden.

Der Erfindung liegt die Aufgabe zugrunde, ein eingangs genanntes Leitungsrohr strukturell und/oder funktionell zu verbessern.

Die Aufgabe wird gelöst mit einem Leitungsrohr mit den Merkmalen des Anspruchs 1. Vorteilhafte Ausführungen und/oder Weiterbildungen sind Gegenstand der Unteransprüche.

Das Leitungsrohr ist ein thermisch gedämmtes Leitungsrohr. Das Leitungsrohr kann ein flexibles oder starres Leitungsrohr sein. Das Leitungsrohr kann zumindest ein Mediumrohr umfassen. Das Leitungsrohr kann beispielsweise zwei, drei, vier oder mehr Mediumrohre umfassen. Das Mediumrohr weist einen thermoplastischen Kunststoff auf.

Das Leitungsrohr und/oder dessen Mediumrohr kann zum Transport von unterschiedlichen Medien, wie beispielsweise flüssige oder gasförmige Medien, wie Wasser oder Gas, dienen und/oder ausgebildet sein. Beispielsweise kann ein Innenrohr des Mediumrohrs zum Transport von unterschiedlichen Medien, wie zum Beispiel flüssige oder gasförmige Medien, wie Wasser oder Gas, dienen und/oder ausgebildet sein. Das Leitungsrohr kann zum Einsatz bei Wasser- oder Gasnetzen bzw. Wasser- oder Gasleitungen dienen und/oder ausgebildet sein. Das Leitungsrohr kann zum Einsatz in Nah- und/oder Fernwärmenetzen bzw. Nah- und/oder Fernwärmeleitungen dienen und/oder ausgebildet sein. Das Leitungsrohr kann zum Einsatz bei Geothermienetzen bzw. Geothermieleitungen dienen und/oder ausgebildet sein. Das Leitungsrohr kann beispielsweise ausgebildet sein, um Medien, wie Heizwasser oder Kühlwasser, für Wasser- und/oder Heizungsversorgungsanlagen zu transportieren. Das Leitungsrohr kann als eine Fernwärmeleitung / ein Fernwärmerohr oder eine Geothermieleitung / ein Geothermierohr ausgebildet sein bzw. kann ein solches sein. Das Leitungsrohr kann auch zum Einsatz bei Trink- oder Abwasserleitungen dienen und/oder ausgebildet sein.

Das Leitungsrohr und/oder dessen Mediumrohr kann ein flexibles und/oder wickelbares und/oder nichtmetallisches Rohr sein. Das Leitungsrohr und/oder dessen Mediumrohr kann ein Verbundrohr sein. Das Verbundrohr kann ein thermoplastisches Verbundrohr sein. Das Leitungsrohr und/oder dessen Mediumrohr kann biegbar ausgebildet sein. Das Leitungsrohr und/oder dessen Mediumrohr kann so ausgebildet sein, um zu Ringen und/oder auf Trommeln gewickelt zu werden. Das Leitungsrohr und/oder dessen Mediumrohr kann an Terrain-Bedingungen anpassbar sein. Das Leitungsrohr und/oder Verbundrohr kann ein starres Verbundrohr sein.

Soweit nicht anders angegeben oder es sich aus dem Zusammenhang nicht anders ergibt, beziehen sich die Angaben "axial", "radial" und "in Umfangsrichtung" auf eine Erstreckungsrichtung der Längsachse und/oder Symmetrieachse des Leitungsrohrs und/oder Mediumrohrs. Das Leitungsrohr und/oder dessen Mediumrohr kann konzentrisch zur Längsachse und/oder Symmetrieachse sein. "Axial" entspricht dann einer Erstreckungsrichtung der Längsachse und/oder Symmetrieachse. "Radial" ist dann eine zur Erstreckungsrichtung der Längsachse und/oder Symmetrieachse senkrechte und sich mit der Längsachse und/oder Symmetrieachse schneidende Richtung. "In Umfangsrichtung" entspricht dann einer Kreisbogenrichtung um die Längsachse und/oder Symmetrieachse.

Das Leitungsrohr und/oder dessen Mediumrohr kann ein verstärktes, wie faserverstärktes, beispielsweise thermoplastisches, Kunststoffrohr sein. Das Leitungsrohr und/oder dessen Mediumrohr kann ein Mehrschichtrohr sein. Das Mediumrohr kann ein, beispielsweise thermoplastisches, Verbundrohr sein. Das Mediumrohr kann ein Innenrohr, beispielsweise aus Kunststoff, wie thermoplastischem Kunststoff, aufweisen. Der Kunststoff kann beispielsweise Polyolefin, Polyethylen, Polyethylen mit hoher Dichte (HDPE), Polypropylen oder Polyamid sein oder aufweisen. Der Kunststoff kann ein unvernetztes Polyolefin sein oder aufweisen. Das unvernetzte Polyolefin kann aus der Gruppe bestehend aus Polyethylen, zum Beispiel PE-RT (Polyethylen mit erhöhter Temperaturbeständigkeit), Polypropylen, zum Beispiel PPR, Polybutylenterephthalat (PBT) und Mischungen davon ausgewählt sein. Der Kunststoff kann ein vernetztes Polyolefin, beispielsweise vernetztes Polyethylen (PEX), sein oder aufweisen. Das vernetzte Polyethylen kann beispielsweise aus einem Polyethylen mit hoher Dichte (HDPE) hergestellt sein oder werden. Vernetztes Polyethylen (PEX) kann vernetzte Bindungen in der Polymehrstruktur aufweisen, die den Thermoplast in einen Duroplast verwandeln können. Die Vernetzung kann während oder nach der Extrusion erfolgen oder erfolgt sein. Beispielsweise kann der Vernetzungsgrad zwischen 60 und 90 % liegen. Der Vernetzungsgrad kann gemäß dem ASTM Standard F876 oder ISO 15875 eingestellt sein oder werden. Das Innenrohr kann ein PEX-Rohr sein. Das Mediumrohr kann eine um das Innenrohr herum angeordnete Verstärkungsschicht aufweisen. Das Mediumrohr kann einen um die Verstärkungsschicht herum angeordneten Schutzmantel aufweisen.

Die Verstärkungsschicht des Mediumrohres kann mindestens eine Lage aus verstärkenden Fasern aufweisen. Die Lage aus verstärkenden Fasern kann im Wesentlichen um das Innenrohr gewickelt und/oder gewebt, wie aufgewebt, und/oder geflochten, wie aufgeflochten, sein oder werden. Beispielsweise können auf das Innenrohr Fasern bzw. Faserstränge aufgewickelt und/oder aufgewebt und/oder aufgeflochten sein oder werden. Die Fasern bzw. Faserstränge können Glasfasern und/oder Kunststofffasern und/oder Kohlefasern und/oder Aramidfasern sein und/oder aufweisen. Die Verstärkungsschicht und/oder die Fasern bzw. Faserstränge kann/können die Oberfläche bzw. Außenfläche des Innenrohrs vollständig oder teilweise bedecken bzw. abdecken. Die Verstärkungsschicht und/oder die Fasern bzw. Faserstränge kann/können 10 bis 50%, beispielsweise 10 bis 20%, der Oberfläche bzw. Außenfläche des Innenrohrs bedecken bzw. abdecken. Die Verstärkungsschicht kann mit dem Innenrohr des Mediumrohrs fest verbunden, beispielsweise verklebt, verschweißt oder verschmolzen, sein.

Der Schutzmantel des Mediumrohres kann ein äußerer Mantel des Mediumrohres sein. Der Schutzmantel des Mediumrohres kann ein Rohr, wie Kunststoffrohr, oder eine Folie, wie Kunststofffolie, sein. Der Schutzmantel kann ein Folienschlauch, wie Kunststofffolienschlauch, sein. Der Schutzmantel des Mediumrohres kann aus, beispielsweise thermoplastischem, Kunststoff hergestellt sein. Der Kunststoff kann beispielsweise Polyolefin, Polyethylen, Polyethylen mit hoher Dichte (HDPE), Polypropylen oder Polyamid sein oder aufweisen. Der Kunststoff des Schutzmantels kann dem Kunststoff des Innenrohrs entsprechen. Der Schutzmantel kann mit der Verstärkungsschicht des Mediumrohrs fest verbunden, beispielsweise verklebt, verschweißt oder verschmolzen, sein.

Das Leitungsrohr umfasst zumindest eine erste Wärmedämmung. Die zumindest eine erste Wärmedämmung ist um das zumindest eine Mediumrohr herum angeordnet. Das Leitungsrohr weist zumindest eine zweite Wärmedämmung auf. Die zumindest eine zweite Wärmedämmung ist eine Vakuumwärmedämmung. Die zumindest eine zweite Wärmedämmung bzw. Vakuumwärmedämmung ist um die zumindest eine erste Wärmedämmung herum angeordnet. Das Leitungsrohr umfasst eine Ummantelung. Die Ummantelung ist um die zumindest eine zweite Wärmedämmung bzw. Vakuumwärmedämmung herum angeordnet.

Das Leitungsrohr kann zumindest eine dritte Wärmedämmung umfassen. Die zumindest eine dritte Wärmedämmung kann zwischen der zweiten Wärmedämmung bzw. Vakuumwärmedämmung und der Ummantelung angeordnet sein. Die zumindest eine dritte Wärmedämmung kann um die zumindest eine zweite Wärmedämmung bzw. Vakuumwärmedämmung herum angeordnet sein. Die Ummantelung des Leitungsrohrs kann um die zumindest eine dritte Wärmedämmung herum angeordnet sein.

Die zumindest eine zweite Wärmedämmung bzw. Vakuumwärmedämmung kann zur thermischen Isolation und/oder Dämmung, insbesondere eines im Mediumrohr bzw. im Innenrohr des Mediumrohrs vorhandenen Mediums, dienen. Die zumindest eine zweite Wärmedämmung bzw. Vakuumwärmedämmung kann eine flexible Vakuumisolierplatte / Vakuumdämmplatte und/oder ein flexibles Vakuumisolationspaneel / Vakuumdämmpaneel sein. Vakuumisolierplatten bzw. Vakuumisolationspaneele können auch als VIPs bezeichnet werden. Die zumindest eine Vakuumwärmedämmung kann zumindest eine flexible Platte, beispielsweise Vakuumisolierplatte / Vakuumdämmplatte, aufweisen. Die zumindest eine Vakuumwärmedämmung kann zumindest ein flexibles Paneel, beispielsweise Vakuumisolationspaneel / Vakuumdämmpaneel, aufweisen. Die zumindest eine Vakuumwärmedämmung bzw. die zumindest eine Platte oder das zumindest eine Paneel kann eine Hülle, wie Außenhülle, aufweisen. Die zumindest eine Vakuumwärmedämmung bzw. die zumindest eine Platte oder das zumindest eine Paneel kann einen Füllstoff aufweisen. Der Füllstoff kann ein Isoliermaterial / Dämmmaterial sein. Der Füllstoff kann ein inerter Füllstoff sein. Der Füllstoff kann pulverförmig sein. Beispielsweise kann der Füllstoff ein anorganisches Oxid und/oder Siliziumdioxid und/oder Kieselsäure sein oder umfassen. Die Kieselsäure kann eine pyrogene Kieselsäure sein. Der Füllstoff kann in der Hülle eingeschlossen und/oder eingekapselt sein. Die Hülle kann für Gase undurchlässig sein. Die zumindest eine Vakuumwärmedämmung bzw. die Hülle kann im Wesentlichen evakuiert sein. Die zumindest eine Vakuumwärmedämmung kann mehrere flexible Platten und/oder mehrere flexible Paneele aufweisen. Die mehreren Platten und/oder mehreren Paneele können miteinander, beispielsweise netzartig, verbunden sein, beispielsweise so, dass diese um ein Rohr gewickelt werden können. Die mehreren Platten und/oder mehreren Paneele können miteinander verklebt, vernäht und/oder laminiert sein. Die zumindest eine Vakuumwärmedämmung kann ein Netz aus mehreren miteinander verbundenen Platten und/oder Paneelen sein.

Die zumindest eine erste Wärmedämmung und/oder die zumindest eine dritte Wärmedämmung kann/können zur thermischen Isolation / Dämmung, insbesondere eines im Mediumrohr bzw. im Innenrohr des Mediumrohrs vorhandenen Mediums, dienen. Die zumindest eine erste Wärmedämmung und/oder die zumindest eine dritte Wärmedämmung kann/können als flexible Schicht ausgebildet sein oder werden. Die zumindest eine erste Wärmedämmung umfasst einen Schaumstoff. Die zumindest eine dritte Wärmedämmung kann einen Schaumstoff umfassen. Die zumindest eine erste Wärmedämmung und/oder die zumindest eine dritte Wärmedämmung kann/können aus einem Schaumstoff hergestellt sein oder werden. Die zumindest eine erste Wärmedämmung und/oder die zumindest eine dritte Wärmedämmung kann/können eine geschäumte Schicht sein. Der Schaumstoff kann ein offenzelliger oder geschlossenzelliger Schaumstoff sein. Der Schaumstoff kann ein wärmedämmender Schaumstoff sein und/oder aus einem wärmedämmenden / wärmeisolierenden Material hergestellt sein oder werden. Die zumindest eine erste Wärmedämmung und/oder die zumindest eine dritte Wärmedämmung bzw. der Schaumstoff kann einen Kunststoffschaum, beispielsweise einen aufgeschäumten Kunststoffschaum, umfassen und/oder daraus hergestellt sein oder werden. Der Kunststoffschaum kann beispielsweise auf der Basis von Polyurethan (PUR), Polyethylen (PE), vernetztem Polyethylen (PEX), Polypropylen (PP), Polyisocyanurat (PIR), thermoplastischen Polyester, thermoplastischen Polyolefin oder Aerogel hergestellt sein oder werden. Der Kunststoffschaum kann zum Beispiel Polyurethanschaum (PUR), wie Polyurethan-Hartschaum, oder Polyisocyanuratschaum, wie Polyiso-Hartschaum (PIR), oder, beispielsweise vernetzter oder unvernetzter, Polyethylenschaum, sein. Der Kunststoffschaum kann beispielsweise ein PUR-Schaumstoff, PEX-Schaumstoff oder PE-Schaumstoff sein. Der Schaumstoff bzw. Kunststoffschaum kann ein flexibler Schaum sein. Die zumindest eine erste Wärmedämmung und/oder die zumindest eine dritte Wärmedämmung bzw. der Schaumstoff / Kunststoffschaum kann eine Dichte von etwa 40 bis 80 kg/m³ und/oder eine Druckfestigkeit von 0,1 bis 0,5 MPa aufweisen.

Die zumindest eine erste Wärmedämmung und/oder die zumindest eine dritte Wärmedämmung kann als ein- oder mehrlagige Wärmedämmung ausgebildet sein. Die zumindest eine erste Wärmedämmung und/oder die zumindest eine dritte Wärmedämmung kann eine oder mehrere, beispielsweise zwei, drei, vier oder mehr, Schichten, wie Wärmedämmschichten / Wärmeisolationsschichten, aufweisen. Jede Schicht kann aus einem wärmedämmenden Material, wie Schaumstoff und/oder Kunststoffschaum, hergestellt sein oder werden. Der Schaumstoff bzw. Kunststoffschaum kann wie vorstehend und/oder nachfolgend beschrieben ausgebildet und/oder hergestellt sein oder werden. Die Schichten können unterschiedlich ausgebildet, beispielsweise mit unterschiedlichen Schaumstoffen bzw. Kunststoffschäumen ausgebildet sein oder werden. Die Schichten können jeweils durch eine Zwischenschicht, wie Folie, voneinander getrennt ausgebildet sein oder werden. Die Zwischenschicht und/oder Folie kann ein Folienschlauch, wie Kunststofffolienschlauch, sein. Die Zwischenschicht und/oder Folie kann aus, beispielsweise thermoplastischem, Kunststoff hergestellt sein oder werden. Der Kunststoff kann beispielsweise Polyolefin, Polyethylen, Polyethylen mit hoher Dichte (HDPE), Polypropylen oder Polyamid sein oder aufweisen. Die Zwischenschicht und/oder Folie kann extrudiert sein oder werden. Die Zwischenschicht und/oder Folie kann mittels eines Extrusionsverfahrens hergestellt sein oder werden. Beispielsweise kann die Zwischenschicht und/oder Folie mittels eines Extruders und/oder eines Rohrkopfes hergestellt bzw. extrudiert sein oder werden.

Die Ummantelung des Leitungsrohrs kann radial außenseitig am Leitungsrohr angeordnet sein oder werden. Die Ummantelung des Leitungsrohrs kann ein Außenmantel sein. Die Ummantelung des Leitungsrohrs kann ein Außenrohr, beispielsweise ein flexibles und/oder biegbares Außenrohr, oder eine Folie, beispielsweise ein flexibler Folienschlauch, sein. Die Ummantelung kann aus, beispielsweise thermoplastischem, Kunststoff hergestellt, beispielsweise extrudiert, sein oder werden. Der Kunststoff kann Polyolefin, Polyethylen, Polyethylen mit hoher Dichte (HDPE), Polypropylen oder Polyamid sein oder aufweisen. Die Ummantelung kann eine Kunststofffolie, zum Beispiel ein Kunststofffolienschlauch, sein. Der Kunststoff der Ummantelung kann dem Kunststoff des Innenrohrs des Mediumrohrs entsprechen. Die Ummantelung des Leitungsrohrs kann eine Wanddicke von etwa 1,0 bis 5,0 mm, beispielsweise von etwa 2 mm aufweisen. Beispielsweise kann die Ummantelung mittels eines Extruders und/oder eines Rohrkopfes hergestellt bzw. extrudiert sein oder werden.

Die zumindest eine erste Wärmedämmung kann auf das Mediumrohr aufgespritzt, aufgesprüht oder aufgegossen sein oder werden. Die zumindest eine erste Wärmedämmung kann mit dem Mediumrohr fest verbunden sein oder werden. Die zumindest eine erste Wärmedämmung kann mit dem Mediumrohr vollständig und/oder vollflächig verbunden, wie verklebt, verschweißt oder verschmolzen, sein oder werden. Die zumindest eine erste Wärmedämmung kann mit dem Schutzmantel des Mediumrohrs fest verbunden sein oder werden. Die zumindest eine erste Wärmedämmung kann mit der äußeren Oberfläche des Mediumrohrs und/oder dessen Schutzmantels fest verbunden sein oder werden. Die zumindest eine Wärmedämmung kann mit einer radial außenseitigen Fläche, wie Außenfläche oder Oberfläche, des Mediumrohrs und/oder dessen Schutzmantels fest verbunden sein oder werden. Die Verbindung kann beispielsweise stoffschlüssig, wie verklebt, verschweißt oder verschmolzen, und/oder kraftschlüssig sein. Eine solche Verbindung kann auch als "fester Verbund" und/oder "bonded" bezeichnet werden. Die Verbindung kann durch die zumindest eine Wärmedämmung selbst verursacht sein. Die Wärmedämmung kann klebende Eigenschaften aufweisen.

Die zumindest eine zweite Wärmedämmung bzw. Vakuumwärmedämmung kann auf die zumindest eine erste Wärmedämmung aufgebracht, beispielsweise gewickelt, wie aufgewickelt, sein oder werden. Die zumindest eine erste Wärmedämmung kann mit der zumindest einen zweiten Wärmedämmung bzw. Vakuumwärmedämmung des Leitungsrohrs fest verbunden sein oder werden. Die zumindest eine erste Wärmedämmung kann mit der Hülle der zumindest einen Vakuumwärmedämmung fest verbunden sein oder werden. Die zumindest eine erste Wärmedämmung kann mit der inneren Oberfläche der zumindest einen Vakuumwärmedämmung und/oder dessen Hülle fest verbunden sein oder werden. Die zumindest eine erste Wärmedämmung kann mit einer radial innenseitigen Fläche, wie Innenfläche oder Oberfläche, der zumindest einen Vakuumwärmedämmung und/oder dessen Hülle fest verbunden sein oder werden. Die zumindest eine Vakuumwärmedämmung kann mit der zumindest einen ersten Wärmedämmung, beispielsweise mit der, insbesondere radial, äußeren Oberfläche der zumindest einen ersten Wärmedämmung, fest verbunden sein oder werden. Die zumindest eine zweite Wärmedämmung bzw. Vakuumwärmedämmung kann mit der zumindest einen ersten Wärmedämmung vollständig und/oder vollflächig verbunden, wie verklebt, verschweißt oder verschmolzen, sein oder werden. Die Verbindung kann beispielsweise stoffschlüssig, wie verklebt, verschweißt oder verschmolzen, und/oder kraftschlüssig sein. Eine solche Verbindung kann auch als "fester Verbund" und/oder "bonded" bezeichnet werden. Die Verbindung kann durch die zumindest eine erste Wärmedämmung selbst verursacht sein. Die zumindest eine erste Wärmedämmung kann klebende Eigenschaften aufweisen.

Die zumindest eine zweite Wärmedämmung bzw. Vakuumwärmedämmung kann mit der Ummantelung des Leitungsrohrs fest verbunden sein oder werden. Die zumindest eine zweite Wärmedämmung bzw. Vakuumwärmedämmung kann mit der Ummantelung des Leitungsrohrs vollständig und/oder vollflächig verbunden, wie verklebt, verschweißt oder verschmolzen, sein oder werden. Die zumindest eine Vakuumwärmedämmung kann mit der inneren Oberfläche der Ummantelung fest verbunden sein oder werden. Die zumindest eine Vakuumwärmedämmung kann mit einer radial innenseitigen Fläche, wie Innenfläche oder Oberfläche, der Ummantelung des Leitungsrohrs fest verbunden sein oder werden. Die Verbindung kann beispielsweise stoffschlüssig, wie verklebt, verschweißt oder verschmolzen, und/oder kraftschlüssig sein. Eine solche Verbindung kann auch als "fester Verbund" und/oder "bonded" bezeichnet werden. Die Verbindung kann durch die Ummantelung des Leitungsrohrs selbst verursacht sein. Die Ummantelung des Leitungsrohrs kann klebende Eigenschaften aufweisen.

Die zumindest eine dritte Wärmedämmung kann auf die zumindest eine zweite Wärmedämmung bzw. Vakuumwärmedämmung aufgespritzt, aufgesprüht oder aufgegossen sein oder werden. Die zumindest eine zweite Wärmedämmung bzw. Vakuumwärmedämmung kann mit der zumindest einen dritten Wärmedämmung fest verbunden sein oder werden. Die zumindest eine zweite Wärmedämmung bzw. Vakuumwärmedämmung kann mit der zumindest einen dritten Wärmedämmung vollständig und/oder vollflächig verbunden, wie verklebt, verschweißt oder verschmolzen, sein oder werden. Die Hülle der zumindest eine Vakuumwärmedämmung kann mit der zumindest einen dritten Wärmedämmung fest verbunden sein oder werden. Die zumindest eine Vakuumwärmedämmung bzw. dessen Hülle kann mit der inneren Oberfläche der zumindest einen dritten Wärmedämmung fest verbunden sein oder werden. Die zumindest eine Vakuumwärmedämmung bzw. dessen Hülle kann mit einer radial innenseitigen Fläche, wie Innenfläche oder Oberfläche, der zumindest einen dritten Wärmedämmung fest verbunden sein oder werden. Die Verbindung kann beispielsweise stoffschlüssig, wie verklebt, verschweißt oder verschmolzen, und/oder kraftschlüssig sein. Eine solche Verbindung kann auch als "fester Verbund" und/oder "bonded" bezeichnet werden. Die Verbindung kann durch die zumindest eine dritte Wärmedämmung selbst verursacht sein. Die zumindest eine dritte Wärmedämmung kann klebende Eigenschaften aufweisen.

Die zumindest eine dritte Wärmedämmung kann mit der Ummantelung des Leitungsrohrs fest verbunden sein oder werden. Die zumindest eine dritte Wärmedämmung kann mit der Ummantelung des Leitungsrohrs vollständig und/oder vollflächig verbunden, wie verklebt, verschweißt oder verschmolzen, sein oder werden. Die zumindest eine dritte Wärmedämmung kann mit der inneren Oberfläche der Ummantelung fest verbunden sein oder werden. Die zumindest eine dritte Wärmedämmung kann mit einer radial innenseitigen Fläche, wie Innenfläche oder Oberfläche, der Ummantelung des Leitungsrohrs fest verbunden sein oder werden. Die Verbindung kann beispielsweise stoffschlüssig, wie verklebt, verschweißt oder verschmolzen, und/oder kraftschlüssig sein. Eine solche Verbindung kann auch als "fester Verbund" und/oder "bonded" bezeichnet werden. Die Verbindung kann durch die Ummantelung des Leitungsrohrs und/oder durch die zumindest eine dritte Wärmedämmung selbst verursacht sein. Die Ummantelung des Leitungsrohrs und/oder die zumindest eine dritte Wärmedämmung kann klebende Eigenschaften aufweisen.

Das Leitungsrohr kann als Verbundrohr ausgebildet sein. Das Leitungsrohr kann vom Mediumrohr über alle Schichten der Wärmedämmung/en zur Ummantelung fest verbunden, beispielsweise vollständig und/oder vollflächig verbunden, wie verklebt, verschweißt oder verschmolzen, sein. Die Schichten der Wärmedämmung/en können die zumindest eine erste Wärmedämmung, die zumindest eine zweite Wärmedämmung bzw. Vakuumwärmedämmung und/oder die zumindest eine dritte Wärmedämmung umfassen. Das Leitungsrohr kann in vollständigem und/oder vollflächigem Verbund, wie Verklebung, Verschweißung oder Verschmelzung, zwischen allen Schichten des Leistungsrohrs und/oder zwischen dem Mediumrohr, der zumindest einen ersten Wärmedämmung, der zumindest einen zweiten Wärmedämmung bzw. Vakuumwärmedämmung, der zumindest einen dritten Wärmedämmung und der Ummantelung sein und/oder diesen Verbund aufweisen. Das Leitungsrohr kann in vollständigem und/oder vollflächigem Verbund, wie Verklebung, Verschweißung oder Verschmelzung, zwischen dem Mediumrohr, der zumindest einen ersten Wärmedämmung, der zumindest einen zweiten Wärmedämmung bzw. Vakuumwärmedämmung und der Ummantelung sein und/oder diesen Verbund aufweisen. Eine solche Verbindung bzw. Verbund kann auch als "fester Verbund" und/oder "bonded" bezeichnet werden.

Eine Befestigung der zumindest einen zweiten Wärmedämmung bzw. Vakuumwärmedämmung und/oder der zumindest einen ersten und/oder dritten Wärmedämmung mittels Band oder Folie kann somit nicht vorgesehen oder nötig sein.

Die zumindest eine erste Wärmedämmung kann, insbesondere in radialer Richtung, eine Dicke aufweisen. Die zumindest eine dritte Wärmedämmung kann, insbesondere in radialer Richtung, eine Dicke aufweisen. In radialer Richtung kann die Dicke der zumindest einen ersten Wärmedämmung kleiner sein als die Dicke der zumindest einen dritten Wärmedämmung. Die Dicke der zumindest einen ersten Wärmedämmung kann zwischen 5 und 50%, beispielsweise zwischen 5 und 20%, der Dicke der zumindest einen dritten Wärmedämmung betragen.

Das Leitungsrohr kann zumindest eine Diffusionssperre bzw. Diffusionsbarriere aufweisen. Die Diffusionssperre bzw. Diffusionsbarriere kann eine Schicht, wie Diffusionssperrschicht, und/oder eine Folie, wie Diffusionssperrfolie, sein. Die Diffusionssperre bzw. Diffusionsbarriere kann aus Aluminium hergestellt sein oder werden. Beispielsweise kann die Schicht und/oder Folie eine Aluminiumschicht bzw. Aluminiumfolie sein. Zusätzlich oder alternativ kann die Diffusionssperre bzw. Diffusionsbarriere aus Ethylen-Vinylalkohol (EVOH) hergestellt sein oder werden bzw. eine Schicht aus Ethylen-Vinylalkohol (EVOH) aufweisen. Die Diffusionssperre bzw. Diffusionsbarriere kann zwischen dem Mediumrohr und der zumindest einen ersten Wärmedämmung angeordnet sein oder werden. Die Diffusionssperre bzw. Diffusionsbarriere kann auf das Mediumrohr aufgebracht, beispielsweise extrudiert, wie aufextrudiert, oder gewickelt, wie aufgewickelt, sein oder werden. Zusätzlich oder alternativ kann die Diffusionssperre bzw. Diffusionsbarriere zwischen der zumindest einen ersten Wärmedämmung und der zumindest einen zweiten Wärmedämmung bzw. Vakuumwärmedämmung angeordnet sein oder werden. Die Diffusionssperre bzw. Diffusionsbarriere kann auf die zumindest eine erste Wärmedämmung aufgebracht, beispielsweise extrudiert, wie aufextrudiert, oder gewickelt, wie aufgewickelt, sein oder werden.

Zusammenfassend und mit anderen Worten dargestellt ergibt sich somit durch die Erfindung unter anderem ein System, wie Leitungsrohr, dass in vollständigem und/oder vollflächigem Verbund, wie Verklebung, zwischen Mediumrohr-VIP-Wärmedämmung-Ummantelung oder zwischen Mediumrohr-Wärmedämmung-VIP-Wärmedämmung-Ummantelung sein kann.

Mit der Erfindung können Wärmeverluste reduziert werden. Eine optimale oder hinreichende Wärmedämmung kann gewährleistet werden. Anforderungen an Sicherheit, Zuverlässigkeit und/oder Robustheit können optimal erfüllt werden.

Nachfolgend werden Ausführungsbeispiele der Erfindung unter Bezugnahme auf Figuren näher beschrieben, dabei zeigen schematisch und beispielhaft:
- Fig. 1: eine Variante eines Leitungsrohrs; und
- Fig. 2: eine weitere Variante eines Leitungsrohrs

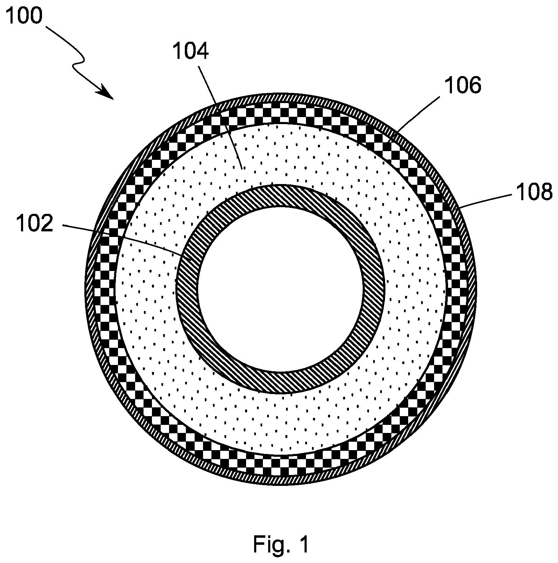

Fig. 1 zeigt ein thermisch gedämmtes Leitungsrohr 100. Das Leitungsrohr 100 ist beispielsweise als Fernwärmerohr ausgebildet. Das Leitungsrohr 100 umfasst ein inneres Mediumrohr 102 aus thermoplastischem Kunststoff, eine erste Wärmedämmung 104, eine als Vakuumwärmedämmung ausgebildete zweite Wärmedämmung 106 und eine Ummantelung 108.

Die erste Wärmedämmung 104 ist um das Mediumrohr 102 herum angeordnet und mit dem Mediumrohr 102 vollflächig fest verbunden, insbesondere verklebt. Die Vakuumwärmedämmung 106 ist um die erste Wärmedämmung 104 herum angeordnet und mit der ersten Wärmedämmung 104 vollflächig fest verbunden, insbesondere verklebt. Die Ummantelung 108 ist um die Vakuumwärmedämmung 106 herum angeordnet und mit der die Vakuumwärmedämmung 106 vollflächig fest verbunden, insbesondere verklebt. Das Leitungsrohr 100 ist somit als Verbundrohr ausgebildet und über alle Schichten vollständig und vollflächig verbunden.

Das Mediumrohr 102 weist ein Innenrohr aus thermoplastischem Kunststoff, eine um das Innenrohr herum angeordnete Verstärkungsschicht und einen um die Verstärkungsschicht herum angeordneten Schutzmantel auf. Die erste Wärmedämmung 104 ist aus einem Schaumstoff, insbesondere einem offenzelligen oder geschlossenzelligen Schaumstoff, hergestellt. Der Schaumstoff kann beispielsweise ein aufgeschäumter Kunststoffschaum sein, der auf Basis von Polyurethan, Polyethylen, vernetztem Polyethylen, Polypropylen, Polyisocyanurat, thermoplastischen Polyester oder thermoplastischen Polyolefin hergestellt ist.

Die Vakuumwärmedämmung 106 ist ein flexible Vakuumisolierplatte und/oder ein flexibles Vakuumisolationspaneel, welche flexible Platte, wie Vakuumisolierplatten, und/oder flexible Paneele, wie Vakuumisolationspaneele, aufweist. Die Platten bzw. Paneele weisen eine Hülle, insbesondere Außenhülle, auf, in der ein Füllstoff, insbesondere ein Isoliermaterial, eingeschlossen ist. Die Hüllen sind im Wesentlichen evakuiert. Die flexiblen Platten bzw. Paneele sind miteinander, insbesondere netzartig, verbunden und um die erste Wärmedämmung 104 herumgewickelt.

Die Ummantelung 108 des Leitungsrohrs 100 ist ein Außenrohr, insbesondere ein flexibles Außenrohr oder flexibler Schlauch, das bzw. der auf die Vakuumwärmedämmung 106 aufgebracht, wie aufextrudiert ist.

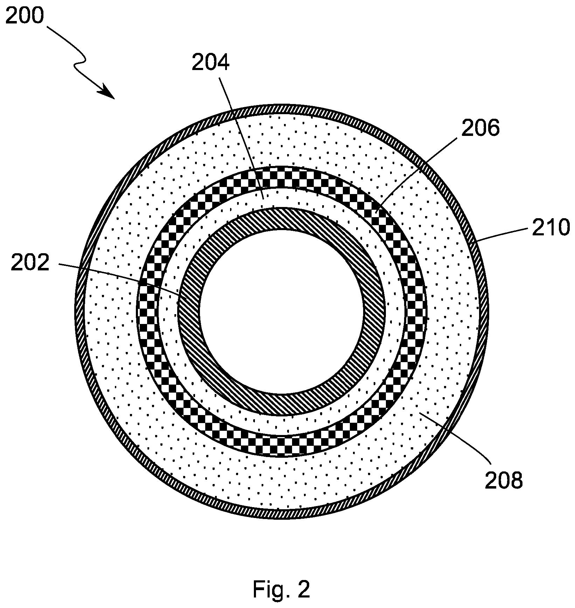

Fig. 2 zeigt eine weitere Variante eines Leitungsrohrs 200. Das Leitungsrohr 200 umfasst ein inneres Mediumrohr 202 aus thermoplastischem Kunststoff, eine erste Wärmedämmung 204, eine als Vakuumwärmedämmung ausgebildete zweite Wärmedämmung 206, eine dritte Wärmedämmung 208 und eine Ummantelung 210. Das Leitungsrohr 200 entspricht im Wesentlichen dem Leitungsrohr 100 gemäß Fig. 1, weist jedoch eine dritte Wärmedämmung 208, die zwischen der Vakuumwärmedämmung 206 und der Ummantelung 210 und um die Vakuumwärmedämmung 206 herum angeordnet ist.

Im vorliegenden Ausführungsbeispiel gemäß Fig. 2 ist die Vakuumwärmedämmung 206 mit der dritte Wärmedämmung 208 vollflächig fest verbunden, insbesondere verklebt. Die dritte Wärmedämmung 208 ist mit der Ummantelung 210 des Leitungsrohrs 200 vollflächig fest verbunden, insbesondere verklebt. Das Leitungsrohr 200 ist ebenfalls als Verbundrohr ausgebildet, wobei alle Schichten vom Mediumrohr 202 über die Wärmedämmungen 204, 206, 208 bis zur Ummantelung 210 vollständig und vollflächig verbunden, wie verklebt, sind.

Die erste Wärmedämmung 204 und die dritte Wärmedämmung 208 können im Wesentlichen gleich ausgebildet bzw. hergestellt sein. In radialer Richtung kann jedoch die Dicke der ersten Wärmedämmung 204 kleiner sein als die Dicke der dritten Wärmedämmung 208.

Im Übrigen wird ergänzend insbesondere auf Fig. 1 und die zugehörige Beschreibung verwiesen.

Mit "kann" sind insbesondere optionale Merkmale der Erfindung bezeichnet. Demzufolge gibt es auch Weiterbildungen und/oder Ausführungsbeispiele der Erfindung, die zusätzlich das jeweilige Merkmal oder die jeweiligen Merkmale aufweisen.

### Bezugszeichen

- 100: Leitungsrohr
- 102: Mediumrohr
- 104: erste Wärmedämmung
- 106: zweite Wärmedämmung / Vakuumwärmedämmung
- 108: Ummantelung

- 200: Leitungsrohr
- 202: Mediumrohr
- 204: erste Wärmedämmung
- 206: zweite Wärmedämmung / Vakuumwärmedämmung
- 208: dritte Wärmedämmung
- 210: Ummantelung

## Patentansprüche

1. Thermisch gedämmtes Leitungsrohr (100, 200), umfassend
- zumindest ein Mediumrohr (102, 202), das einen thermoplastischen Kunststoff aufweist;
- zumindest eine um das zumindest eine Mediumrohr (102, 202) herum angeordnete erste Wärmedämmung (104, 204);
- zumindest eine um die zumindest eine erste Wärmedämmung (104, 204) herum angeordnete zweite Wärmedämmung (106, 206), wobei die zumindest eine zweite Wärmedämmung als Vakuumwärmedämmung (106, 206) ausgebildet ist; und
- eine um die zumindest eine Vakuumwärmedämmung (106, 206) herum angeordnete Ummantelung (108, 210),
wobei die zumindest eine erste Wärmedämmung (104, 204) mit dem Mediumrohr (102, 202) und/oder mit der Vakuumwärmedämmung (106, 206) des Leitungsrohrs (100, 200) vollständig und vollflächig fest verbunden ist, wobei die zumindest eine erste Wärmedämmung (104, 204) einen Schaumstoff umfasst.

2. Leitungsrohr (100, 200) nach Anspruch 1, **dadurch gekennzeichnet, dass** das Leitungsrohr (100, 200) zumindest eine dritte Wärmedämmung (208) aufweist, die zwischen der zumindest einen Vakuumwärmedämmung (106, 206) und der Ummantelung (108, 210) angeordnet und um die zumindest eine Vakuumwärmedämmung (106, 206) herum angeordnet ist.

3. Leitungsrohr (100, 200) nach wenigstens einem der vorhergehenden Ansprüche, **dadurch gekennzeichnet, dass** die Vakuumwärmedämmung (106, 206) eine flexible Vakuumisolierplatte und/oder ein flexibles Vakuumisolationspaneel ist.

4. Leitungsrohr (100, 200) nach wenigstens einem der vorhergehenden Ansprüche, **dadurch gekennzeichnet, dass** die Vakuumwärmedämmung (106, 206) zumindest eine flexible Platte, wie Vakuumisolierplatte, und/oder zumindest ein flexibles Paneel, wie Vakuumisolationspaneel, aufweist, wobei die zumindest eine Platte bzw. das zumindest eine Paneel eine Hülle, insbesondere Außenhülle, aufweist, in der ein Füllstoff, insbesondere ein Isoliermaterial, eingeschlossen ist, wobei die Hülle im Wesentlichen evakuiert ist.

5. Leitungsrohr (100, 200) nach Anspruch 4, **dadurch gekennzeichnet, dass** die Vakuumwärmedämmung (106, 206) mehrere flexible Platten und/oder mehrere flexible Paneele aufweist, die miteinander, insbesondere netzartig, verbunden sind.

6. Leitungsrohr (100, 200) nach wenigstens einem der vorhergehenden Ansprüche, **dadurch gekennzeichnet, dass** die zumindest eine erste Wärmedämmung (104, 204) aus dem Schaumstoff, insbesondere aus einem offenzelligen oder geschlossenzelligen Schaumstoff, hergestellt ist, und/oder dass die zumindest eine dritte Wärmedämmung (208) einen Schaumstoff, insbesondere einen offenzelligen oder geschlossenzelligen Schaumstoff, umfasst und/oder daraus hergestellt ist.

7. Leitungsrohr (100, 200) nach wenigstens einem der vorhergehenden Ansprüche, **dadurch gekennzeichnet, dass** die zumindest eine erste Wärmedämmung (104, 204) und/oder die zumindest eine dritte Wärmedämmung (208) einen aufgeschäumten Kunststoffschaum, insbesondere auf der Basis von Polyurethan, Polyethylen, vernetztem Polyethylen, Polypropylen, Polyisocyanurat, thermoplastischen Polyester oder thermoplastischen Polyolefin, umfasst und/oder daraus hergestellt ist bzw. sind.

8. Leitungsrohr (100, 200) nach wenigstens einem der vorhergehenden Ansprüche, **dadurch gekennzeichnet, dass** das zumindest eine Mediumrohr (102, 202) ein Innenrohr aus thermoplastischem Kunststoff, eine um das Innenrohr herum angeordnete Verstärkungsschicht und einen um die Verstärkungsschicht herum angeordneten Schutzmantel aufweist.

9. Leitungsrohr (100, 200) nach wenigstens einem der vorhergehenden Ansprüche, **dadurch gekennzeichnet, dass** die Ummantelung (108, 210) des Leitungsrohrs (100, 200) ein Außenrohr, insbesondere ein flexibles Außenrohr, oder eine Folie, insbesondere ein flexibler Folienschlauch, ist.

10. Leitungsrohr (100, 200) nach wenigstens einem der vorhergehenden Ansprüche, **dadurch gekennzeichnet, dass** die zumindest eine erste Wärmedämmung (104, 204) mit dem Mediumrohr (102, 202) und/oder mit der Vakuumwärmedämmung (106, 206) des Leitungsrohrs (100, 200) stoffschlüssig, wie verklebt, verschweißt oder verschmolzen ist.

11. Leitungsrohr (100, 200) nach wenigstens einem der vorhergehenden Ansprüche, **dadurch gekennzeichnet, dass** die Vakuumwärmedämmung (106, 206) mit der zumindest einen ersten Wärmedämmung (104, 204), insbesondere vollständig und/oder vollflächig, fest verbunden, insbesondere stoffschlüssig, wie verklebt, verschweißt oder verschmolzen, und/oder kraftschlüssig verbunden ist.

12. Leitungsrohr (100, 200) nach wenigstens einem der vorhergehenden Ansprüche, **dadurch gekennzeichnet, dass** die Vakuumwärmedämmung (106, 206) mit der Ummantelung (108, 210) des Leitungsrohrs (100, 200) oder mit der zumindest einen dritten Wärmedämmung (208), insbesondere vollständig und/oder vollflächig, fest verbunden, insbesondere stoffschlüssig, wie verklebt, verschweißt oder verschmolzen, und/oder kraftschlüssig verbunden ist.

13. Leitungsrohr (100, 200) nach wenigstens einem der vorhergehenden Ansprüche 2 bis **dadurch gekennzeichnet, dass** die zumindest eine dritte Wärmedämmung (208) mit der Ummantelung (108, 210) des Leitungsrohrs (100, 200), insbesondere vollständig und/oder vollflächig, fest verbunden, insbesondere stoffschlüssig, wie verklebt, verschweißt oder verschmolzen, und/oder kraftschlüssig verbunden ist.

14. Leitungsrohr (100, 200) nach wenigstens einem der vorhergehenden Ansprüche, **dadurch gekennzeichnet, dass** das Leitungsrohr (100, 200) als Verbundrohr ausgebildet ist und/oder dass das Leitungsrohr (100, 200) vom Mediumrohr (102, 202) über alle Schichten der Wärmedämmung (104, 106, 204, 206, 208), die zumindest eine erste Wärmedämmung (104, 204), die Vakuumwärmedämmung (106, 206), ggf. die zumindest eine dritte Wärmedämmung (208), zur Ummantelung (108, 210) fest verbunden, insbesondere vollständig und/oder vollflächig verbunden, wie verklebt, verschweißt oder verschmolzen, ist.

15. Leitungsrohr (100, 200) nach wenigstens einem der vorhergehenden Ansprüche, **dadurch gekennzeichnet, dass** in radialer Richtung die Dicke der zumindest einen ersten Wärmedämmung (104, 204) kleiner ist als die Dicke der zumindest einen dritten Wärmedämmung (208).

## Claims

1. Thermally insulated pipe (100, 200) comprising
- at least one medium pipe (102, 202) comprising a thermoplastic material;
- at least one first thermal insulation (104, 204) arranged around the at least one medium pipe (102, 202);
- at least one second thermal insulation (106, 206) arranged around the at least one first thermal insulation (104, 204), wherein the at least one second thermal insulation is designed as vacuum thermal insulation (106, 206); and
- a sheath (108, 210) arranged around the at least one vacuum thermal insulation (106, 206),
wherein the at least one first thermal insulation (104, 204) is completely and fully connected to the medium pipe (102, 202) and/or to the vacuum thermal insulation (106, 206) of the pipe (100, 200), wherein the at least one first thermal insulation (104, 204) comprises a foam material.

2. Pipe (100, 200) according to claim 1, **characterised in that** the pipe (100, 200) has at least one third thermal insulation (208) which is arranged between the at least one vacuum thermal insulation (106, 206) and the sheath (108, 210) and is arranged around the at least one vacuum thermal insulation (106, 206).

3. Pipe (100, 200) according to at least one of the preceding claims, **characterised in that** the vacuum thermal insulation (106, 206) is a flexible vacuum insulation board and/or a flexible vacuum insulation panel.

4. Pipe (100, 200) according to at least one of the preceding claims, **characterised in that** the vacuum thermal insulation (106, 206) has at least one flexible plate, such as a vacuum insulation plate, and/or at least one flexible panel, such as a vacuum insulation panel, wherein the at least one plate or the at least one panel has a shell, in particular an outer shell, in which a filler, in particular an insulating material, is enclosed, wherein the shell is substantially evacuated.

5. Pipe (100, 200) according to claim 4, **characterised in that** the vacuum thermal insulation (106, 206) comprises several flexible plates and/or several flexible panels which are connected to each other, in particular in a network-like manner.

6. Pipe (100, 200) according to at least one of the preceding claims, **characterised in that** the at least one first thermal insulation (104, 204) is made of foam, in particular open-cell or closed-cell foam, and/or that the at least one third thermal insulation (208) comprises foam, in particular open-cell or closed-cell foam, and/or is made thereof.

7. Pipe (100, 200) according to at least one of the preceding claims, **characterised in that** the at least one first thermal insulation (104, 204) and/or the at least one third thermal insulation (208) comprises and/or is made of a foamed plastic foam, in particular based on polyurethane, polyethylene, cross-linked polyethylene, polypropylene, polyisocyanurate, thermoplastic polyester or thermoplastic polyolefin.

8. Pipe (100, 200) according to at least one of the preceding claims, **characterised in that** the at least one medium pipe (102, 202) has an inner pipe made of thermoplastic material, a reinforcement layer arranged around the inner pipe and a protective jacket arranged around the reinforcement layer.

9. Pipe (100, 200) according to at least one of the preceding claims, **characterised in that** the sheath (108, 210) of the pipe (100, 200) is an outer pipe, in particular a flexible outer pipe, or a film, in particular a flexible film tube.

10. Pipe (100, 200) according to at least one of the preceding claims, **characterised in that** the at least one first thermal insulation (104, 204) is bonded, such as glued, welded or fused, to the medium pipe (102, 202) and/or to the vacuum thermal insulation (106, 206) of the pipe (100, 200).

11. Pipe (100, 200) according to at least one of the preceding claims, **characterised in that** the vacuum thermal insulation (106, 206) is firmly connected, in particular completely and/or over the entire surface, to the at least one first thermal insulation (104, 204), in particular in a material-locking manner, such as glued, welded or fused, and/or in a force-locking manner.

12. Pipe (100, 200) according to at least one of the preceding claims, **characterised in that** the vacuum thermal insulation (106, 206) is firmly connected, in particular by a material bond, such as glued, welded or fused, and/or by a force-fit connection, to the sheath (108, 210) of the pipe (100, 200) or to the at least one third thermal insulation (208), in particular completely and/or over the entire surface.

13. Pipe (100, 200) according to at least one of the preceding claims 2 to 12, **characterised in that** the at least one third thermal insulation (208) is firmly connected to the sheath (108, 210) of the pipe (100, 200), in particular completely and/or over the entire surface, in particular by a material bond, such as gluing, welding or fusion, and/or by a force-fit connection.

14. Pipe (100, 200) according to at least one of the preceding claims, **characterised in that** the pipe (100, 200) is designed as a composite pipe and/or **in that** the pipe (100, 200) is firmly connected from the medium pipe (102, 202) via all layers of the thermal insulation (104, 106, 204, 206, 208), comprising at least one first thermal insulation (104, 204), the vacuum thermal insulation (106, 206), and, if applicable, at least one third thermal insulation (208), to the sheath (108, 210), in particular completely and/or over the entire surface, such as by gluing, welding or fusion.

15. Pipe (100, 200) according to at least one of the preceding claims, **characterised in that**, in the radial direction, the thickness of the at least one first thermal insulation (104, 204) is smaller than the thickness of the at least one third thermal insulation (208).

## Revendications

1. Conduite thermiquement isolée (100, 200) comprenant
- au moins un tube de transport (102, 202) comprenant une matière thermoplastique;
- au moins une première isolation thermique (104, 204) disposée autour dudit au moins un tube de transport (102, 202);
- au moins une deuxième isolation thermique (106, 206) disposée autour de la au moins une première isolation thermique (104, 204), la au moins une deuxième isolation thermique étant conçue comme une isolation thermique sous vide (106, 206); et
- une enveloppe (108, 210) disposée autour de la au moins une isolation thermique sous vide (106, 206),
la au moins une première isolation thermique (104, 204) est reliée de manière fixe, complète et sur toute sa surface au tube de transport (102, 202) et/ou à l'isolation thermique sous vide (106, 206) du tube conducteur (100, 200), la au moins une première isolation thermique (104, 204) comprenant une mousse.

2. Conduite (100, 200) selon la revendication 1, **caractérisée en ce que** la conduite (100, 200) comporte au moins une troisième isolation thermique (208) qui est disposée entre la au moins une isolation thermique sous vide (106, 206) et l'enveloppe (108, 210) et est disposée autour de la au moins une isolation thermique sous vide (106, 206).

3. Conduite (100, 200) selon au moins l'une des revendications précédentes, **caractérisée en ce que** l'isolation thermique sous vide (106, 206) est une plaque d'isolation sous vide flexible et/ou un panneau d'isolation sous vide flexible.

4. Conduite (100, 200) selon au moins l'une des revendications précédentes, **caractérisée en ce que** l'isolation thermique sous vide (106, 206) comprend au moins une plaque flexible, telle qu'une plaque d'isolation sous vide, et/ou au moins un panneau flexible, tel qu'un panneau d'isolation sous vide, la au moins une plaque ou le au moins un panneau comportant une enveloppe, en particulier une enveloppe extérieure, dans laquelle est enfermée une matière de remplissage, en particulier un matériau isolant, l'enveloppe étant essentiellement évacuée.

5. Conduite (100, 200) selon la revendication 4, **caractérisée en ce que** l'isolation thermique sous vide (106, 206) comprend plusieurs plaques flexibles et/ou plusieurs panneaux flexibles qui sont reliés entre eux, en particulier sous forme de réseau.

6. Conduite (100, 200) selon au moins l'une des revendications précédentes, **caractérisée en ce que** la au moins une première isolation thermique (104, 204) est fabriquée à partir de mousse, en particulier à partir d'une mousse à cellules ouvertes ou à cellules fermées, et/ou **en ce que** la au moins une troisième isolation thermique (208) comprend une mousse, en particulier une mousse à cellules ouvertes ou à cellules fermées, et/ou est fabriquée à partir de celle-ci.

7. Conduite (100, 200) selon au moins l'une des revendications précédentes, **caractérisée en ce que** la au moins une première isolation thermique (104, 204) et/ou la au moins une troisième isolation thermique (208) comprend une mousse plastique expansée, en particulier à base de polyuréthane, polyéthylène, polyéthylène réticulé, polypropylène, polyisocyanurate, polyester thermoplastique ou polyoléfine thermoplastique, et/ou sont fabriqués à partir de celle-ci.

8. Conduite (100, 200) selon au moins l'une des revendications précédentes, **caractérisée en ce que** la au moins une conduite de fluide (102, 202) comprend une conduite intérieure en matière thermoplastique, une couche de renfort disposée autour de la conduite intérieure et une enveloppe de protection disposée autour de la couche de renfort.

9. Conduite (100, 200) selon au moins l'une des revendications précédentes, **caractérisée en ce que** l'enveloppe (108, 210) de la conduite (100, 200) est un tube extérieur, en particulier un tube extérieur flexible, ou une feuille, en particulier un tube flexible en feuille.

10. Conduite (100, 200) selon au moins l'une des revendications précédentes, **caractérisée en ce que** la au moins une première isolation thermique (104, 204) est reliée au tube de transport (102, 202) et/ou à l'isolation thermique sous vide (106, 206) du tube conducteur (100, 200) par adhérence, par exemple par collage, soudage ou fusion.

11. Conduite (100, 200) selon au moins l'une des revendications précédentes, **caractérisée en ce que** l'isolation thermique sous vide (106, 206) est reliée de manière fixe, en particulier de manière complète et/ou sur toute la surface, à la au moins une première isolation thermique (104, 204), en particulier par adhérence de matière, comme collée, soudée ou fondue, et/ou par liaison par force.

12. Conduite (100, 200) selon au moins l'une des revendications précédentes, **caractérisée en ce que** l'isolation thermique sous vide (106, 206) est reliée de manière fixe, en particulier par adhérence de matière, comme collée, soudée ou fondue, et/ou par liaison par force, à l'enveloppe (108, 210) de la conduite (100, 200) ou à au moins une troisième isolation thermique (208), en particulier de manière complète et/ou sur toute la surface.

13. Conduite (100, 200) selon au moins l'une des revendications 2 à 12 précédentes, **caractérisée en ce que** la au moins une troisième isolation thermique (208) est reliée de manière fixe, en particulier par adhérence de matière, comme collée, soudée ou fondue, et/ou par liaison par force, à l'enveloppe (108, 210) de la conduite (100, 200), en particulier de manière complète et/ou sur toute la surface.

14. Conduite (100, 200) selon au moins l'une des revendications précédentes, **caractérisée en ce que** la conduite (100, 200) est conçue comme un tuyau composite et/ou **en ce que** la conduite (100, 200) est reliée de manière fixe, depuis le tube de transport (102, 202) à travers toutes les couches d'isolation thermique (104, 106, 204, 206, 208), comprenant au moins une première isolation thermique (104, 204), l'isolation thermique sous vide (106, 206), le cas échéant au moins une troisième isolation thermique (208), jusqu'à l'enveloppe (108, 210), en particulier de manière complète et/ou sur toute la surface, par exemple par collage, soudage ou fusion.

15. Conduite (100, 200) selon au moins l'une des revendications précédentes, **caractérisée en ce que**, dans le sens radial, l'épaisseur de la au moins une première isolation thermique (104, 204) est inférieure à l'épaisseur de la au moins une troisième isolation thermique (208).
